# EUROPEAN PATENT APPLICATION

(11) **EP 1 621 920 A1**
(43) Date of publication of application: **01.02.2006**
(21) Application number: 05106217.2
(22) Date of filing: 07.07.2005
(51) Int. Cl.: G02C 5/22

(54) **Elastic hinge for eyeglasses**

(30) Priority: 22.07.2004 IT PD20040196
(71) Applicant: Visottica Industrie S. P. A., 31058 Susegana TV (IT)
(72) Inventor: Montalban Rinaldo, 30100 Venezia (IT)
(74) Representative: Modiano, Micaela Nadia

(57) **Abstract**

An elastic hinge for eyeglasses, comprising an elongated box-like body (11) to be fixed to the end of a temple (12), the box-like body (11) being provided with an open receptacle (13), inside which an elastic element (14) and a first hinge articulation element (15) associated therewith are inserted. The first hinge articulation element (15) is arranged so that it can slide partially within the receptacle (13). The first hinge articulation element (15) is further pivoted to a second hinge articulation element (16) to be fixed to the front of the eyeglasses. The elastic element (14) acts by traction and has two ends (17, 18) which are folded transversely to the axis of the action of the elastic element (14). A first one (17) of the two ends (17, 18) is inserted in a corresponding first seat (19) formed in the box-like body (11), and the second end (18) is inserted in a corresponding second seat (20) provided in the first articulation element (15). The ends (17, 18) are locked in the corresponding seats (19, 20) by plastic deformation of the seats (19, 20) in order to create interference with the ends (17, 18).

## Description

The present invention relates to an elastic hinge for eyeglasses.

Currently, many eyeglasses have elastic hinges for connecting the temples to the front of the eyeglasses.

The purpose of these elastic hinges is to allow a stable closed position of the folded temples in which they are adjacent to the front of the eyeglasses and to allow a stable position for use of the temples at right angles to the front.

In addition to this function, elastic hinges must allow so-called overtravel for the temples, in order to make it easier to put them on and reduce the possibilities of breakage due to rotation beyond the normal opening angle.

There are various types of elastic hinge. The most widespread types include an elastic hinge constituted by an elongated metallic box-like body provided with a receptacle inside which an elastic element, such as for example a helical spring, and a first hinge articulation element associated with the elastic element are inserted during a step of assembly that follows the welding of the box-like body to the corresponding temple (which is likewise metallic).

The elastic element is retained by a contrast element, which is locked inside the receptacle.

The first articulation element is arranged, with a guiding part, so that it can slide within the receptacle and protrudes from it through a front opening with a hinge component.

Such first articulation element is pivoted by means of the hinge component to a complementary component of a second hinge articulation element, which in turn is rigidly coupled to the front of the frame of the eyeglasses.

In order to allow stable positions for closure and use, the second articulation element is of the type with a cam which interacts with the head of the box-like body.

In this type of elastic hinge, during the assembly of its components the internal parts are inserted after welding the hollow box-like body to the temple.

This type of operation entails that the manufacturer of the hinge cannot supply the hinge to the user, i.e., to an eyeglasses manufacturer, in an already assembled condition.

The eyeglasses manufacturer is therefore forced to weld beforehand the box-like body to the temple of the eyeglasses and to then assemble all the components inside said box-like body of the hinge.

The problem arises from the fact that if the hinge were welded to the temple after the step for assembling the components of said hinge, the heat that would be generated during welding would spread uniformly throughout the box-like body of the hinge, and therefore throughout the contents of said box-like body, would irreparably damage the spring, which by annealing would lose its elasticity characteristics.

Various welding technologies have been devised in order to obviate the problems of welding the hinge to the temple of the eyeglasses by means of conventional methods.

In particular, the method of electrowelding (already well-known in other sectors) has been adapted and developed for the eyeglass sector.

As it is known, electrowelding is a pulsed process and therefore lasts for a very short time; moreover, electrowelding allows to generate minimal amounts of heat and to localize them only in preset points of the hinge.

With electrowelding technology it is therefore possible to provide hinges for eyeglasses that can be already preassembled by their manufacturer and thus supply them to the eyeglasses manufacturer.

In a first example of hinge of the electrowelded type, the elastic articulation mechanism of the hinge is inserted in the front hole of a closed box-like body and is then retained within the box-like body by a guiding cylinder, which is locked by a stud provided on said box-like body.

A second example of hinge that uses electrowelding for fixing to the temple has a box-like body which is open on the bottom, with the articulation mechanism enclosed in it.

This type of structure allows easy assembly of the components inside the box-like body. However, at the same time it has the problem that the internal mechanism may escape when the hinge is supplied loose to the eyeglasses manufacturer.

In order to avoid this problem, a shoulder is formed inside the box-like body and the spring of the internal mechanism, which is inserted in a compressed condition, acts thereon.

The thrust of the spring and the friction generated between the first turn of said spring and the shoulder retain the mechanism within the box-like body even if it is open.

This method for retaining the mechanism inside the box-like body becomes safer as the compression of the spring increases.

However, the spring cannot be highly compressed, since during operation after assembly the mechanism would not have a sufficient working stroke (also in view of the limited dimensions of said mechanism).

The spring of a mechanism of this type, which acts by compression, determines the dimension of the hinge in which it is inserted.

The spring acting by compression must in fact be inserted in a receptacle whose dimensions are at least equal to the length of the pack of the turns of the spring plus a length equal to the stroke of the first articulation element of the hinge.

The trend of the eyeglasses hinge market is to have increasingly smaller and less visible hinges.

In view of what has been said above, it is evident that springs that act by compression are a hindrance to hinge miniaturization and therefore a hindrance to the development of the market.

The aim of the present invention is to provide an elastic hinge for eyeglasses that solves the problems linked to the fixing of elastic hinges to temples for eyeglasses.

Within this aim, an object of the present invention is to provide an elastic hinge for eyeglasses in which the components do not escape during welding to the temple of the eyeglasses.

Another obj ect of the present invention is to provide an elastic hinge for eyeglasses that is preassembled.

Another obj ect of the present invention is to provide an elastic hinge for eyeglasses that can be assembled easily.

Another obj ect of the present invention is to provide an elastic hinge for eyeglasses that has reduced dimensions with respect to the hinges currently in use.

This aim and these and other objects which will become better apparent hereinafter are achieved by an elastic hinge for eyeglasses, of the type comprising an elongated box-like body to be fixed to the end of a temple, said box-like body being provided with an open receptacle, inside which an elastic element and a first hinge articulation element associated therewith are inserted, said first hinge articulation element being arranged so as to slide partially within said receptacle, said first hinge articulation element being further pivoted to a second hinge articulation element to be fixed to the front of the eyeglasses, said hinge being characterized in that said elastic element acts by traction and has two ends which are folded transversely to the axis of the action of said elastic element, a first one of said two ends being inserted in a corresponding first seat formed in said box-like body, a second one of said ends being inserted in a corresponding second seat provided in said first articulation element, said ends being locked in said corresponding seats by plastic deformation thereof in order to create interference with said ends.

Further characteristics and advantages of the invention will become better apparent from the following detailed description of a preferred but not exclusive embodiment thereof, illustrated by way of non-limiting example in the accompanying drawings, wherein:
Figure 1 is a partially sectional top view of an elastic hinge according to the invention, illustrating a portion of a temple and a portion for connection to the front of a pair of eyeglasses;
Figure 2 is a sectional view, taken along the line II-II, of an elastic hinge according to the invention, welded to a corresponding temple;
Figure 3 is a detail sectional view, taken along the line III-III, of an elastic hinge;
Figure 4 is a schematic view of the box-like body of a hinge according to the invention, shown in cross-section as in Figure 3, during the operation for plastic deformation of a seat for accommodating one end of said elastic element of the hinge;

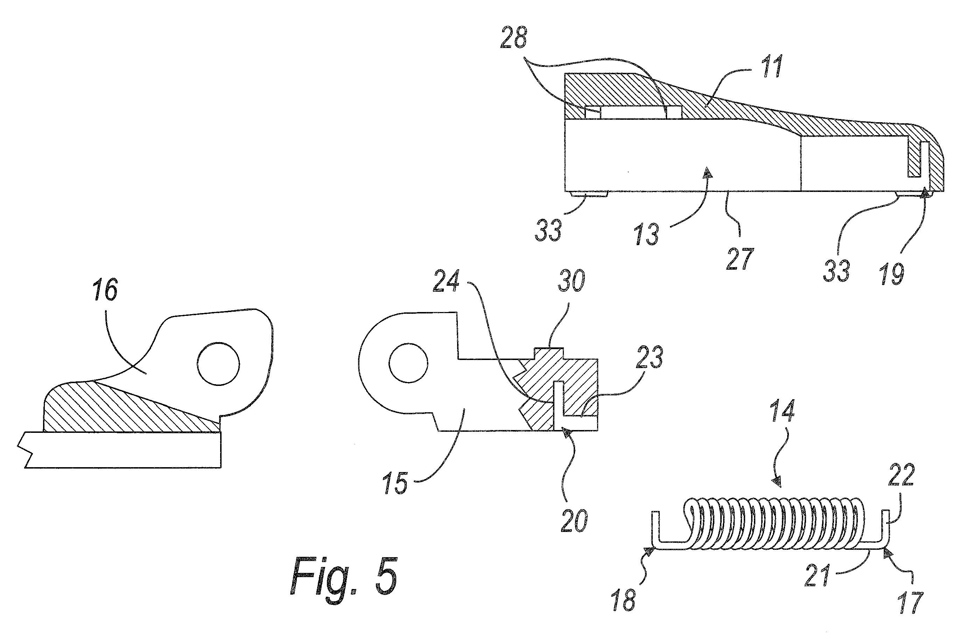

Figure 5 is an exploded view of an elastic hinge according to the invention, to be fixed to a corresponding temple and front of a pair of eyeglasses.

With reference to the figures, an elastic hinge for eyeglasses according to the invention is generally designated by the reference numeral 10.

The elastic hinge 10 is of the type that comprises an elongated box-like body 11 to be welded to the end of a temple, designated schematically by the reference numeral 12 in the figures.

The box-like body 11 is provided with an open receptacle 13, inside which an elastic element 14 and a first hinge articulation element 15 associated with the elastic element 14 are inserted during an assembly step that precedes the welding of the box-like body 11 to the temple 12.

The elastic element 14 is constituted for example by a helical spring of the type that is packed when at rest (the contiguous turns are mutually adjacent or in mutual contact).

The first articulation element 15 is arranged, with a guiding portion, so that it can slide within the receptacle 13.

Further, such first articulation element 15 is pivoted to a second hinge articulation element 16, to be fixed to the front of the eyeglasses.

The elastic element 14, i.e., the helical spring, has two ends, respectively a first end 17 and a second end 18, which are folded transversely to the axis of the action of the elastic element 14.

In particular, the two ends 17 and 18 are folded substantially so as to form a diametrical direction of the spring and in practice are folded so as to intersect the axis of the action of the spring.

Of these two folded ends of the elastic element 14, the first end 17 is inserted in a corresponding first seat 19 formed in the box-like body 11, substantially proximate to the end of the box-like body 11 that lies furthest with respect to the axis about which the temple 12 is pivoted to the front of the eyeglasses.

The second folded end 18 of the elastic element 14 is inserted in a corresponding second seat 20 formed on the first articulation element 15.

The ends 17 and 18 of the elastic element 14 are each substantially formed by a straight portion 21, which is substantially parallel to the axis of the action of the elastic element 14, and by a portion 22 which is folded transversely to said axis of action.

Each corresponding seat 19 and 20 for the ends 17 and 18 is constituted by a recess 23 for supporting the straight portion 21 of the end and by a hole 24 whose axis is substantially perpendicular to the surface of contact between the box-like body 11 and the temple 12.

The elastic element 14 acts by traction between the box-like body 11 and the first articulation element 15.

The ends 17 and 18 of the elastic element 14 are locked in the corresponding seats 19 and 20 by plastic deformation of said seats so as to create interference with said ends of the elastic element.

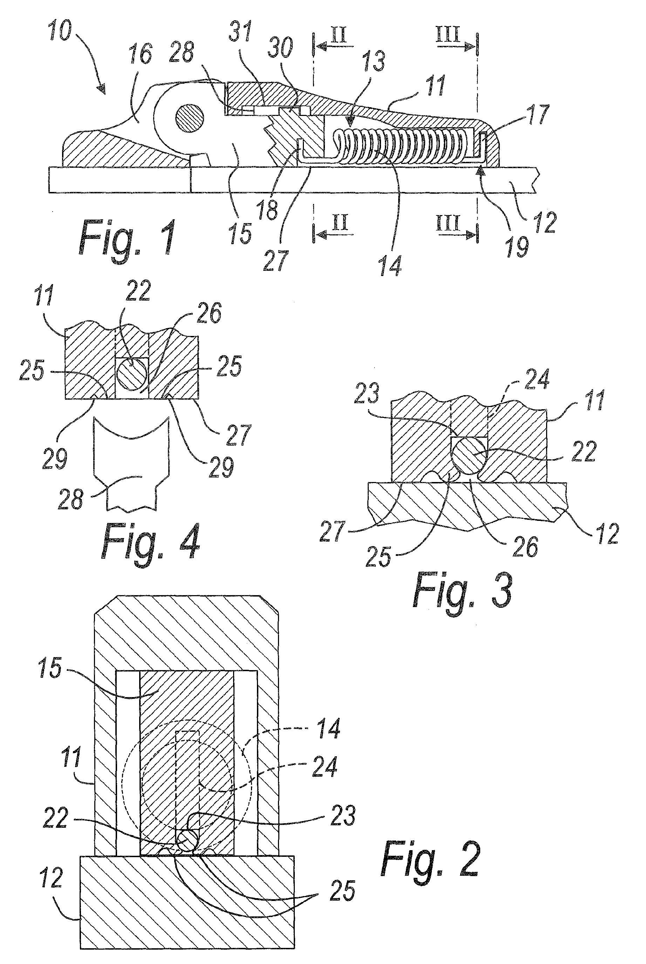

The plastic deformation can be provided for example by means of a caulking of the upper portions 25 of the recesses 23 for accommodating the straight portions 21 of the ends 17 and 18 of the elastic element 14, as shown in Figures 2 and 3.

It is important to note that the depth of the recesses 23 for supporting the straight portions 21 of the ends 19 and 20 is greater than the diameter of the wire that forms the helical spring; in this manner, a space generally designated by the reference numeral 26 is present between the spring and the surface 27 of the box-like body 11 that makes contact with the temple 12 once the hinge has been fixed to said temple. During the operation of the hinge, therefore, the turns of the helical spring do not slide on the temple.

Figure 4 is a diagram related to the caulking operation.

Caulking is performed during assembly. Once the ends 17 and 18 have been inserted in the corresponding seats 19 and 20 until the straight portions 21 lie on the bottom of the recesses 23, a caulking tool 28 is placed on corresponding small guides 29 formed at the upper portions 25 of the recesses 23 and is pushed until it deforms the upper portions 25.

This caulking operation stably locks the ends 17 and 18 of the elastic element 14 inside the box-like body 14 and the first hinge articulation element 15.

A tab 30 is provided on the portion of the first hinge articulation element 15 that is internal to the first box-like body 11 and is arranged so that it can slide within a track 31 formed on the bottom of the box-like body 11.

The ends of the track 31 form the stroke limits 32 for the first hinge articulation element 15 and therefore determine the overall length of the stroke of the first articulation element 15. In Figures 1 and 4, the stroke limits 32 correspond to the beginning of the region that connects, along the width, the ends of the track 31, a region which the tab 30 cannot enter since it substantially has the same width as the track 31.

Metallic protrusions 33 are provided, before welding to the temple, on the edge for contact between the box-like body 11 and the temple 12 and act as welding material during welding.

In practice it has been found that the invention thus described solves the problems noted in known types of elastic hinge for eyeglasses; in particular, the present invention provides an elastic hinge for eyeglasses that allows stable preassembly of the components of the hinge.

The use of an elastic element in which the ends are stably locked both to the box-like body and to the first articulation element prevents the components of the hinge from being able to disassemble when they are supplied to the eyeglasses manufacturer.

The use of an extremely simple plastic deformation operation such as caulking allows to provide an extremely simplified stable coupling of the elastic element to the box-like body and to the first hinge articulation element.

Advantageously, the fact of using a spring that is substantially packed when at rest and therefore works by traction allows to choose a smaller spring than hinges that use springs that act by compression, thus reducing the overall dimensions of the hinge.

The invention thus conceived is susceptible of numerous modifications and variations, all of which are within the scope of the inventive concept; all the details may further be replaced with other technically equivalent elements.

In practice, the materials employed, so long as they are compatible with the specific use, as well as the dimensions, may be any according to the requirements and the state of the art.

The disclosures in Italian Patent Application No. PD2004A000196 from which this application claims priority are incorporated herein by reference.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An elastic hinge for eyeglasses, of the type comprising an elongated box-like body (11) to be fixed to the end of a temple (12), said box-like body (11) being provided with an open receptacle (13), inside which an elastic element (14) and a first hinge articulation element (15) associated therewith are inserted, said first hinge articulation element (15) being arranged so that it can slide partially within said receptacle (13), said first hinge articulation element (15) being further pivoted to a second hinge articulation element (16) to be fixed to the front of the eyeglasses, said hinge (10) being **characterized in that** said elastic element (14) acts by traction and has two ends (17, 18) which are folded transversely to the axis of the action of said elastic element (14), a first one (17) of said two ends (17, 18) being inserted in a corresponding first seat (19) formed in said box-like body (11), a second one (18) of said ends being inserted in a corresponding second seat (20) provided in said first hinge articulation element (15), said ends (17, 18) being locked in said corresponding seats (19, 20) by plastic deformation thereof (19, 20) in order to create interference with said ends (17, 18).

2. The elastic hinge for eyeglasses according to claim 1, **characterized in that** said elastic element (14) is constituted by a helical spring of the type that is packed when at rest, said helical spring having a first end (17) and a second end (18) which are folded transversely to the axis of the action of said elastic element (14).

3. The elastic hinge for eyeglasses according to claim 2, **characterized in that** said first and second ends (17, 18) are folded substantially so as to define a diametrical direction for said spring.

4. The elastic hinge for eyeglasses according to claim 3, **characterized in that** said first end (17) and said second end (18) of said spring are each substantially formed by a straight portion (21), which is substantially parallel to the axis of the action of said spring, and by a folded portion (22), which lies transversely to said axis of action, each corresponding said seat (19, 20) for said first and second ends (17, 18) being constituted by a recess (23) for supporting said straight portion (21) and by a hole (24) whose axis is substantially perpendicular to the surface of contact between said box-like body (11) and said temple (12).

5. The elastic hinge for eyeglasses according to claim 4, **characterized in that** said plastic deformation of said corresponding seats (19, 20) such as to produce interference with said first and second ends (17, 18) is provided by deforming the upper portions (25) of said recesses (23) for accommodating said straight portions (21) of said first and second ends (17, 18).

6. The elastic hinge for eyeglasses according to one or more of the preceding claims, **characterized in that** said plastic deformation is provided by means of a caulking operation.

7. The elastic hinge for eyeglasses according to claim 6, **characterized in that** guides (29) are provided on said box-like body (11), at said upper portions (25) of said recesses (23), in order to facilitate the positioning of the caulker (28) during the caulking operation.

8. The hinge for eyeglasses according to one or more of the preceding claims, **characterized in that** a tab (26) is provided on the portion of the first hinge articulation element (15) that lies inside said box-like body (11), and is arranged so that it can slide within a track (27) formed on the bottom of said box-like body (11), the ends of said track (27) defining the stroke limits (28) for said first hinge articulation element (15).

9. The elastic hinge for eyeglasses according to one or more of the preceding claims, **characterized in that** metallic protrusions (28) are provided, before welding to the temple, on the edge for contact between said box-like body (11) and the temple (12), and act as welding material during welding.

10. The elastic hinge for eyeglasses according to one or more of the preceding claims, **characterized in that** a space (26) is provided between said elastic element (14) and the surface (27) of said box-like body (11) that is to be fixed to said temple (12), said space being such as to avoid sliding between said elastic element (14) and the temple (12) during the operation of said elastic hinge (10).

11. The elastic hinge for eyeglasses according to claim 10, **characterized in that** the depth of said recesses (23) for supporting said straight portions (21) of said ends (19, 20) of said helical spring is greater than the diameter of the wire of said helical spring.
